# EUROPEAN PATENT APPLICATION

(11) **EP 3 404 351 A1**
(43) Date of publication of application: **21.11.2018**
(21) Application number: 16885010.5
(22) Date of filing: 20.10.2016
(51) Int. Cl.: F28F 9/22, F28D 9/02

(54) **HEAT EXCHANGER**

(30) Priority: 12.01.2016 JP 2016003817
(71) Applicant: Sumitomo Precision Products Co., Ltd., Amagasaki-shi, Hyogo 660-0891 (JP)
(72) Inventor: AOKI, Taku, Amagasaki-shi Hyogo 660-0891 (JP)
(74) Representative: Viering, Jentschura & Partner mbB Patent- und Rechtsanwälte
(86) International application number: PCT/JP2016/081149
(87) International publication number: WO 2017/122407

(57) **Abstract**

A heat exchanger (100) includes a core (1) and a header (2). At least one of first header portions (21a and 21b) or second header portions (21c and 21d) includes a guiding flow passage (24) that has a plurality of flow passages (25) which guide a fluid between a plurality of core end openings (14) and a tank (23) while changing a flow passage sectional shape.

## Description

### Technical Field

The present invention relates to a heat exchanger, and particularly to a heat exchanger including a header which serves as an entrance or an exit of a fluid.

### Background Art

A heat exchanger including a header, which serves as an entrance or an exit of fluids is known in the related art. Such a heat exchanger is disclosed in, for example, JP-UM-A-62-160173.

In JP-UM-A-62-160173, a plate-fin heat exchanger including a core, in which a plurality of first flow passages and a plurality of second flow passages are alternately stacked to exchange heat between two types of fluids, and a header, which serves as an entrance or an exit of the fluids, is disclosed. The core is formed in a shape in which a corner of a rectangular parallelepiped is obliquely cut off, and a hollow triangular prismatic header is formed in a triangular prismatic region corresponding to a cut off portion. The core has a uniform flow passage sectional shape as a whole. The header has a cylindrical port that connects the inside of the header to the outside and a hollow triangular prismatic tank. The plurality of first flow passages and the plurality of second flow passages each branch off toward two end surfaces of the core, which are obliquely inclined in opposite directions to each other, and each are open to another tank from each of the end surfaces to the inside. When the fluids flow in, the fluids are distributed to respective openings of the plurality of first flow passages or the second flow passages via the tanks of the respective ports.

### Prior Art

### Patent Document

[PTL 1] JP-UM-A-62-160173

### Summary of the Invention

### Problem to be Solved by the Invention

In the heat exchanger in JP-UM-A-62-160173, a plurality of openings of the first (second) flow passage units each have a horizontally-long rectangular shape when a flow passage section orthogonal to a flow direction of a fluid is seen. The tank has a section formed as a vertically long rectangular single flow passage covering a plurality of openings of the stacked first (second) flow passage units. In addition, the flow passage sectional area of the tank is significantly large compared to the total area (total sectional area) of the openings of the first flow passages (second flow passages). That is, in the heat exchanger disclosed in JP-UM-A-62-160173, the flow passage sectional shape significantly changes along the flow of a fluid at a boundary portion between the core and the tank when the fluid passes through the header. As a result, a problem that a pressure loss of a fluid when the fluid flows into the heat exchanger and flows out from the heat exchanger via the header becomes greater is caused by a significant change in the flow passage sectional shape.

The invention is devised to solve such a problem described above, and one object of the invention is to provide a heat exchanger that can suppress an increase in a pressure loss of a fluid when the fluid flows into the heat exchanger or flows out from the heat exchanger via a header.

### Means for Solving the Problem

To achieve the object, there is provided a heat exchanger of the invention including a core that has a plurality of first flow passages and a plurality of second flow passages and exchanges heat between fluids flowing in the first flow passages and the second flow passages respectively and a header that has a first header portion, which is connected to an end surface of the core and covers core end openings of the plurality of first flow passages, and a second header portion, which covers core end openings of the plurality of second flow passages. The first header portion and the second header portion each include a port for causing the fluids to flow into or flow out from an inside thereof and a tank connected to the port. At least one of the first header portion or the second header portion includes a guiding flow passage that is connected to the plurality of core end openings of one of the first flow passages or the second flow passages and that has a plurality of flow passages which extend to a corresponding tank side and guide the fluids between the plurality of core end openings and the tank while changing a flow passage sectional shape orthogonal to a flow direction of the fluids.

In the heat exchanger according to the invention, as described above, at least one of the first header portion or the second header portion is provided with a guiding flow passage that is connected to the plurality of core end openings of one of the first flow passages or the second flow passages and that has a plurality of flow passages which extend to a corresponding tank side and guide the fluids between the plurality of core end openings and the tank while changing a flow passage sectional shape orthogonal to a flow direction of the fluids. Accordingly, the heat exchanger can set flow passage sectional shapes of the plurality of flow passages of the flow passage guiding units regardless of the flow passage sectional shapes of the core end openings, and can guide the fluids between the tanks and the core via each of the flow passages. For example, the flow passage sectional shapes of the plurality of flow passages of the flow passage guiding units can be changed to become closer to a flow passage sectional shape on the tank side as becoming closer to the tank side. In addition, the flow passage sectional shapes of the flow passages of the flow passage guiding units can be changed to become closer to the shapes of the core end openings as becoming closer to the core end opening side. As a result, since a change in the flow passage sectional shape between the core end openings of at least one of the first flow passages or the second flow passages and the header (tanks) can be made moderate, the heat exchanger can suppress an increase in a pressure loss of a fluid when the fluid flows into the heat exchanger or flows out from the heat exchanger via the header. In addition, by the header being provided with the guiding flow passages having the plurality of flow passages, it is not necessary to provide a flow passage structure, of which the sectional shape changes, on the core side. As a result, the heat exchanger can adopt the core having a simple shape, and can suppress the structure of the core becoming complicated.

In the heat exchanger according to the invention, preferably, the plurality of core end openings each have a first flow passage width in a width direction orthogonal to a flow passage height direction, in a section orthogonal to the flow direction of the fluids. The tank has a second flow passage width smaller than the first flow passage width in the width direction, in a boundary portion of the tank with the guiding flow passage. The flow passages each have the flow passage sectional shape which changes such that the closer to a core end opening side, the closer a flow passage width becomes to the first flow passage width, and the closer to the tank side, the closer the flow passage width becomes to the second flow passage width. When configured in such a manner, a change in the flow passage width between the header (tanks) and the core end openings can be made moderate by changing the flow passage widths of the flow passages. As a result, the heat exchanger can suppress an increase in the pressure loss caused by a sudden change in the flow passage widths at the boundary portions between the header (tanks) and the core end openings.

In the heat exchanger according to the invention, preferably, the plurality of core end openings each have a first flow passage height in a flow passage height direction, in a section orthogonal to the flow direction of the fluids. The tank has a second flow passage height larger than the first flow passage height in the flow passage height direction, in a boundary portion of the tank with the guiding flow passage. The flow passages each have the flow passage sectional shape which changes such that the closer to the core end opening side, the closer a flow passage height becomes to the first flow passage height, and the closer to the tank side, the closer the flow passage height becomes to the second flow passage height. When configured in such a manner, a change in the flow passage height between the header (tanks) and the core end openings can be made moderate by changing the flow passage heights of the flow passages. As a result, the heat exchanger can suppress an increase in the pressure loss caused by a sudden change in the flow passage heights at the boundary portions between the header (tanks) and the core end openings.

In the heat exchanger according to the invention, preferably, the flow passages each are formed such that a ratio between a flow passage width and a flow passage height of the flow passage sectional shape is changed while a flow passage sectional area is kept substantially constant in the flow direction of the fluids. When configured in such a manner, even in a case where the flow passage widths or the flow passage heights of the flow passages are changed according to the shapes of the core end openings and the flow passage sectional shapes on the tank side, it is not necessary to change the flow passage sectional area of each of the flow passages to become larger. As a result, the heat exchanger can suppress an increase in the pressure loss caused by a change in the flow passage sectional areas of the flow passages.

In the heat exchanger according to the invention, preferably, the first header portion and the second header portion are integrally provided in the common header. The guiding flow passage includes a first guiding flow passage having the plurality of flow passages for guiding the fluids flowed into or flowed out from the plurality of first flow passages and a second guiding flow passage having the plurality of flow passages for guiding the fluids flowed into or flowed out from the plurality of second flow passages. When configured in such a manner, the header can be used in common by providing the first guiding flow passage and the second guiding flow passage corresponding to the first flow passages and the second flow passages respectively in the header even in a case where both of the core end openings of the first flow passages and the core end openings of the second flow passages are formed in the common end surface of the core. As a result, since the internal volume of the header can be decreased, the heat exchanger can suppress the total weight (wet weight) of the heat exchanger, in particular, in a case where a liquid fluid is used compared to a case where the first flow passages and the second flow passages are separately provided in the header. This is particularly useful for a heat exchanger used in application of strict weight limits of an aircraft. In addition, even in a case where the header of the first flow passages and the second flow passages is used in common, the suppression of a pressure loss can be achieved by changing the flow passage sectional shapes of the respective flow passages of the first guiding flow passages and the second guiding flow passages.

In the heat exchanger according to the invention, preferably, the core end openings of the first flow passages and the core end openings of the second flow passages each include a plurality of entrance openings and a plurality of exit openings formed in the end surface of the core. The guiding flow passage provided in at least one of the first header portion covering the first flow passages or the second header portion covering the second flow passages includes an entrance guiding flow passage corresponding to the plurality of entrance openings and an exit guiding flow passage corresponding to the plurality of exit openings. When configured in such a manner, even in a case where both of the entrance openings and the exit openings are formed in the common end surface of the core, the header 2 can be used in common due to the entrance guiding flow passage and the exit guiding flow passage corresponding to the entrance openings and the exit openings respectively. As a result, since the internal volume of the header can be decreased, the heat exchanger can suppress the total weight (wet weight) of the heat exchanger, in particular, in a case where a liquid fluid is used compared to a case where the header is separately provided from the entrance openings and the exit openings. In addition, even in a case where the header is used in common, the heat exchanger can achieve the suppression of a pressure loss by changing the flow passage sectional shapes of the respective flow passages of the entrance guiding flow passages and the exit guiding flow passages.

In the heat exchanger according to the invention, preferably, the core has a stacked structure in which the plurality of first flow passages and the plurality of second flow passages are alternately stacked in a height direction via partition plates. An edge of the header is joined to an edge of the end surface of the core. Respective bulkheads of the plurality of flow passages of the header are joined to core end surface portions of the partition plates between the first flow passages and the second flow passages. The word "join" in the invention is a concept that includes not only integrally fixing the core to the header, which are separately provided, by means of welding, brazing, and other methods but also integrally fixing (forming) the header to the core by directly forming (modelling) a structure portion configuring the header with respect to the end surface of the core. When configured as described above, the core and the header can be joined not only to the edges but also to an outer surface where the core end openings (core end surface portions of the partition plate) are not formed, in the end surface in which the core end openings are formed. As a result, since a joining area can be increased and a region between both ends of the end surface of the core in a direction in which the partition plates extend can be set as a joining region, the heat exchanger can effectively improve the joining strength of the core and the header. In addition, since the pressure resistance performance of the header can be improved with the improvement of the joining strength and the degree of freedom of internal structure of the header can be enhanced, the heat exchanger can easily optimize the shapes of the flow passages and the tanks of the header.

In the heat exchanger according to the invention, preferably, the core has a rectangular parallelepiped shape, and the respective core end openings of the plurality of first flow passages and the plurality of second flow passages are vertically arranged in the end surface formed of any one of side surfaces of a rectangular parallelepiped. The header is joined to the end surface so as to integrally include the first header portion and the second header portion and to collectively cover the respective core end openings of the plurality of first flow passages and the plurality of second flow passages. When configured in such a manner, it can be suppressed that the structure of the core becomes complicated since the core can be formed in a rectangular parallelepiped shape just as a general stacked heat exchanger. In addition, since the flow passages of the guiding flow passages can distribute (guide) a fluid to the first flow passages and the second flow passages, it is not necessary to form the respective core end openings of the plurality of first flow passages and the plurality of second flow passages at positions separated away from each other in order to mount another header. As a result, the heat exchanger can simplify the structure of the core.

### Effect of the Invention

According to the invention, as described above, an increase in a pressure loss of a fluid when the fluid flows into the heat exchanger or flows out from the heat exchanger via the header can be suppressed.

### Brief Description of the Drawings

Fig. 1 is a perspective view illustrating a heat exchanger according to one embodiment of the invention.
Fig. 2 is a horizontal sectional view illustrating a first flow passage of the heat exchanger according to the embodiment of the invention.
Fig. 3 is a horizontal sectional view illustrating a second flow passage of the heat exchanger according to the embodiment of the invention.
Fig. 4 is a view illustrating an end surface of a core.
Fig. 5 is an enlarged perspective view schematically illustrating a horizontal section of a header.
Fig. 6 is a view schematically illustrating a section taken along 500-500 line of Fig. 3.
Fig. 7 is a view illustrating a core side end portion of the header.
Fig. 8 is a view schematically illustrating a section taken along 600-600 line of Fig. 6.
Fig. 9 is an enlarged sectional view illustrating an enlarged internal structure of the header in Fig. 6.
Fig. 10 is a schematic view conceptually illustrating a shape of a flow passage.
Fig. 11 is a schematic view illustrating a modification example in which a heat exchanger is provided with a mixing header.

### Modes for Carrying Out the Invention

Hereinafter, an embodiment of the invention will be described based on the drawings.

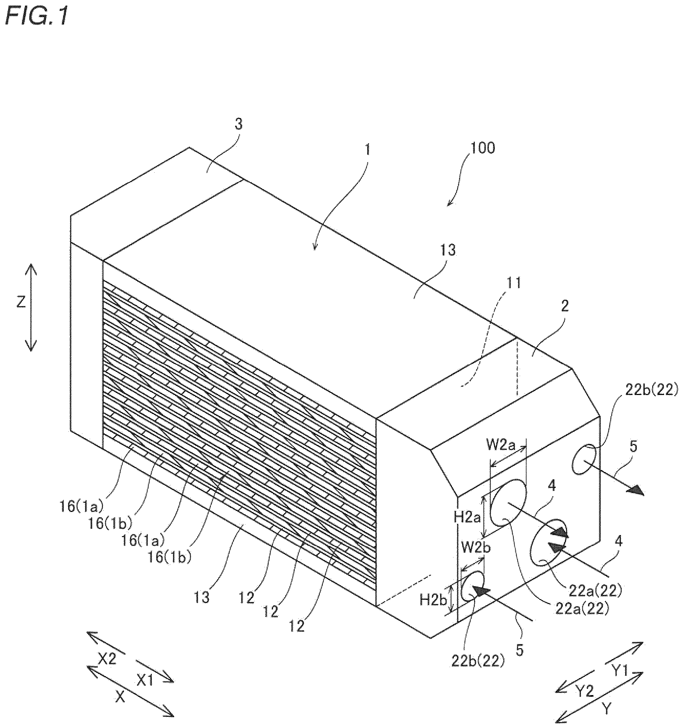

First, a configuration of a heat exchanger 100 according to the embodiment will be described with reference to Figs. 1 to 10. In the embodiment, an example of a plate-fin heat exchanger will be described. In addition, an example of a heat exchanger that is mounted on an aircraft and exchanges heat between fuel for an aircraft and oil for an aircraft (lubricating oil) will be described in the embodiment.

### (Overall configuration of heat exchanger)

As illustrated in Fig. 1, the heat exchanger 100 includes a core 1, a header 2, and a header for U-turn flow 3.

The core 1 includes a plurality of first flow passages 1a in which fuel 4 flows and a plurality of second flow passages 1b in which oil 5 flows. The core 1 is configured to exchange heat between the fuel 4 flowing in the first flow passages 1a and the oil 5 flowing in the second flow passages 1b. Both of the fuel 4 and the oil 5 are examples of "fluids" in the Claims. For convenience of description, the first flow passages 1a and the second flow passages 1b are illustrated with different hatching in Fig. 1.

The core 1 has a stacked structure in which the plurality of first flow passages 1a and the plurality of second flow passages 1b are alternately stacked in a height direction (Z-direction). The core 1 has a rectangular parallelepiped shape. In the embodiment, the header 2 is provided on an end surface 11 which is on one side (X1-direction side) in a longitudinal direction of the core 1. The header for U-turn flow 3 is provided on an end surface which is on the other side (X2-direction side) in the longitudinal direction of the core 1.

The header 2 is connected to the end surface 11 of the core 1, and is a collecting and distributing unit which serves as an entrance or an exit of a fluid with respect to the core 1. In the embodiment, the header 2 has a function of causing the fuel 4 to flow into (distribute) and flow out from (collect) the respective first flow passages 1a. In addition, the header 2 has a function of causing the oil 5 to flow into (distribute) and flow out from (collect) the respective second flow passages 1b.

The header for U-turn flow 3 is connected to a side surface of the core 1 on the opposite side to the header 2. The header for U-turn flow 3 has a function of causing fluids (fuel 4 and oil 5), which have flowed from the header 2 and passed through the core 1, to make a U-turn in a reverse direction (direction of the header 2) and to flow into the core 1 again.

The heat exchanger 100 can be provided, for example, in an aircraft. After exchanging heat with the oil 5 in the heat exchanger 100, the fuel 4 is supplied to an engine. After being supplied to a lubricating portion (sliding portion) of the engine of the aircraft, the oil 5 is introduced into the heat exchanger 100. After exchanging heat with the fuel 4, the oil 5 returns to an oil tank. As a result, in the heat exchanger 100, the fuel 4 is preheated and heat absorbed by the oil 5 is discharged by the engine being lubricated and heat being exchanged between the oil 5 which absorbed heat and the fuel 4.

### (Core)

Referring back to Fig. 1, the core 1 is configured by alternately stacking the plurality of first flow passages 1a and the plurality of second flow passages 1b via tube plates 12. The tube plates 12 are examples of a "partition plate" in the Claims. Side plates 13 are provided at both ends of the core 1 in a stacking direction (Z-direction), respectively. Hereinafter, the stacking direction of the first flow passages 1a and the second flow passages 1b will be referred to as the Z-direction, a direction (side where there is the end surface 11) where the header 2 is provided with respect to the core 1 will be referred to as an X-direction, and a direction orthogonal to the X-direction and the Z-direction will be referred to as a Y-direction.

The first flow passages 1a and the second flow passages 1b are hollow plates sandwiched between the tube plates 12. The tube plates 12 function as primary heat transfer surfaces for heat exchange. The tube plates 12 are formed of plate-shaped members each having high thermal conductivity and a small thickness.

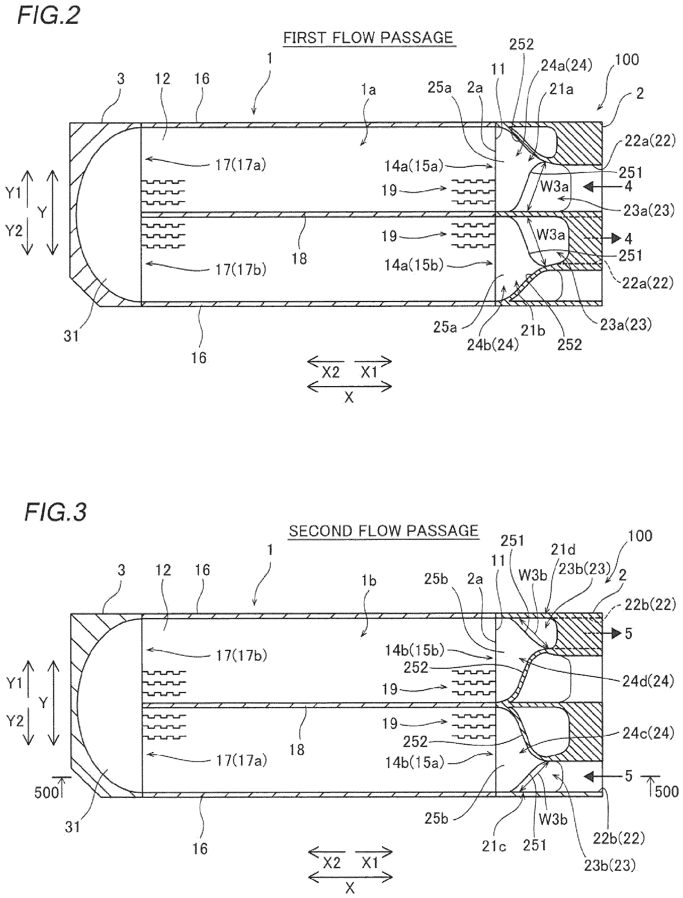

As illustrated in Figs. 2 and 3, the respective first flow passages 1a and the respective second flow passages 1b have substantially the same structure. The first flow passages 1a and the second flow passages 1b are defined by the tube plates 12 in the Z-direction and side bars 16, which are both end portions in the Y-direction and are sandwiched between the tube plates 12. The first flow passages 1a and the second flow passages 1b linearly extend in the X-direction. Respective X1-direction side end portions and X2-direction side end portions of the first flow passages 1a and the second flow passages 1b are open. Core end openings 14a and 14b, which are open to the outside from the end surface 11 of the core 1, are formed in the Xl-direction side end portions of the first flow passages 1a and the second flow passages 1b, respectively. Respective openings for U-turn flow 17, which are open to the outside from the opposite end surface of the core 1, are formed in the X2-direction side end portions of the first flow passages 1a and the second flow passages 1b.

In addition, the first flow passages 1a and the second flow passages 1b each are partitioned into a Y1-side and a Y2-side with a partitioning member 18 disposed in the center in the Y-direction. The partitioning members 18 extend from the X1-direction side end portions to the X2-direction side end portions. The partitioning members 18 partition each of the core end openings 14a of the first flow passages 1a and the core end openings 14b of the second flow passages 1b into entrance openings 15a and exit openings 15b. Similarly, the openings for U-turn flow 17 of the first flow passages 1a and the second flow passages 1b each have an exit portion 17a and an entrance portion 17b, which are defined by the partitioning members 18.

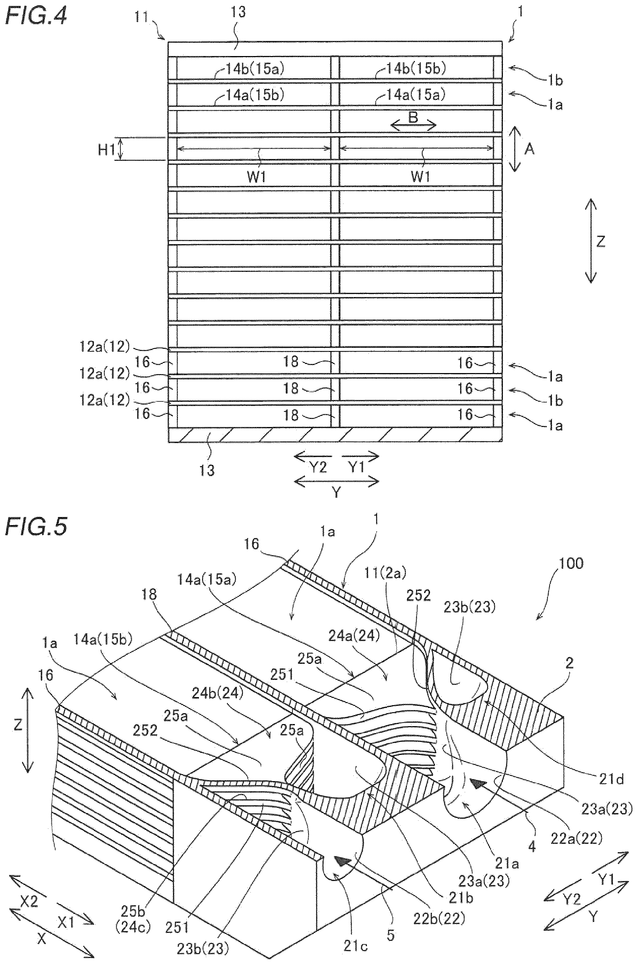

As illustrated in Fig. 4, in the core 1, the core end openings 14a of the plurality of first flow passages 1a and the core end openings 14b of the plurality of second flow passages 1b are vertically arranged in the end surface 11 (refer to Fig. 4) which is a rectangular parallelepiped side surface. In the embodiment, the respective core end openings 14 (entrance openings 15a and exit openings 15b) of the first flow passages 1a and the second flow passages 1b have substantially the same sectional shape (opening shape). That is, each of the plurality of core end openings 14 (entrance openings 15a and exit openings 15b) has a flow passage width W1 in a width direction (B-direction) orthogonal to a flow passage height direction (A-direction), in a section orthogonal to a flow direction of a fluid. The flow passage width W1 is an example of a "first flow passage width" in the Claims. In addition, each of the plurality of core end openings 14 (entrance openings 15a and exit openings 15b) has a flow passage height H1 in the flow passage height direction (A-direction), in the section orthogonal to the flow direction of a fluid. The flow passage height H1 is an example of a "first flow passage height" in the Claims. The core end openings 14 (entrance openings 15a and exit openings 15b) each are formed in a horizontally-long rectangular shape such that the flow passage width W1 is larger than the flow passage height H1.

As illustrated in Figs. 2 and 3, respective corrugated fins 19 are provided along circulation paths from the entrance openings 15a to the exit openings 15b inside the first flow passages 1a and the second flow passages 1b. Although the corrugated fins 19 are provided over the entire paths of the first flow passages 1a and the second flow passages 1b, the corrugated fins are partially illustrated at several places of the first flow passages 1a for convenience of illustration in Figs. 2 and 3. In addition, the illustration of the corrugated fins 19 is omitted in each drawing other than Figs. 2 and 3. The corrugated fins 19 function as secondary heat transfer surfaces of the first flow passages 1a.

The core 1 is a counter-flow core in which the flow of the fluid (fuel 4) flowing in the first flow passages 1a and the flow of the fluid (oil 5) flowing in the second flow passages 1b are opposed to each other in reverse directions. That is, fuel flows into the first flow passages 1a (refer to Fig. 2) from the entrance openings 15a on a Y1-direction side, and flows in an X2-direction. After then, the fuel makes a U-turn to a Y2-direction side via the openings for U-turn flow 17, and flows out from the exit openings 15b on the Y2-direction side. After flowing into the second flow passages 1b (refer to Fig. 3) from the entrance openings 15a on the Y2-direction side and flowing in the X2-direction, the oil makes a U-turn to the Y1-direction side via the openings for U-turn flow 17 and flows out from the exit openings 15b on the Y1-direction side.

### (Header)

As illustrated in Fig. 1, the header 2 is provided to cover the end surface 11 on the X1-direction side of the core 1. The header 2 is provided to cover the entire surface of the rectangular end surface 11 (refer to Fig. 4). The header 2 covers each of the core end openings 14a (entrance openings 15a and exit openings 15b) of the first flow passages 1a and the core end openings 14b (entrance openings 15a and exit openings 15b) of the second flow passages 1b.

Specifically, the header 2 includes header portions 21a and 21b (refer to Fig. 2) covering the core end openings 14a of the plurality of first flow passages 1a and header portions 21c and 21d (refer to Fig. 3) covering the core end openings 14b of the plurality of second flow passages 1b, as illustrated in Fig. 5. Both of the header portions 21a and 21b are examples of a "first header portion" in the Claims. Both of the header portions 21c and 21d are examples of a "second header portion" in the Claims.

As illustrated in Figs. 2 and 5, the header portion 21a covers the entrance openings 15a, out of the core end openings 14a of the first flow passages 1a. The header portion 21b covers the exit openings 15b. The header portions 21a and 21b function as an inlet and an outlet of the fuel 4, respectively, with respect to the plurality of first flow passages 1a. As illustrated in Fig. 3, the header portion 21c covers the entrance openings 15a, out of the core end openings 14b of the second flow passages 1b. The header portion 21d covers the exit openings 15b. The header portions 21c and 21d function as an inlet and an outlet of the oil 5, respectively, with respect to the plurality of second flow passages 1b.

As illustrated in Fig. 5, the two header portions 21a and 21b on a first flow passage 1a side and the two header portions 21c and 21d on a second flow passage 1b side are integrally provided in the common (single) header 2, in the embodiment. In total, four header portions (21a, 21b, 21c, and 21d) are spaces isolated from each other by an inner wall portion of the header 2. The four header portions (21a, 21b, 21c, and 21d) are arranged along the end surface 11 of the core 1 in the Y-direction. As described above, in the embodiment, the header 2 integrally includes the four header portions (21a, 21b, 21c, and 21d), and is joined to the end surface 11 so as to collectively cover the respective core end openings 14 (14a and 14b) of the plurality of first flow passages 1a and the plurality of second flow passages 1b.

As described in Figs. 2 and 3, the header portions (21a, 21b, 21c, and 21d) each include a port 22 for causing a fluid to flow into or flow out from an inside thereof and a tank 23 connected to the port 22. That is, the two header portions 21a and 21b each include a port 22a and a tank 23a. The two header portions 21c and 21d each include a port 22b and a tank 23b. In addition, in the embodiment, the header portions (21a, 21b, 21c, and 21d) each include a guiding flow passage 24 (24a, 24b, 24c, and 24d) connecting the plurality of core end openings 14 to the tank 23. In each of the header portions 21a, 21b, 21c, and 21d, the port 22, the tank 23, and the guiding flow passage 24 are integrally formed. The guiding flow passage 24a is an example of a "first guiding flow passage" and an "entrance guiding flow passage" in the Claims. The guiding flow passage 24b is an example of the "first guiding flow passage" and an "exit guiding flow passage" in the Claims. The guiding flow passage 24c is an example of a "second guiding flow passage" and the "entrance guiding flow passage" in the Claims. The guiding flow passage 24c is an example of the "second guiding flow passage" and the "exit guiding flow passage" in the Claims.

### <Port>

As illustrated in Fig. 1, the ports 22 (22a and 22b) have a substantially circular tubular shape, and are configured as connecting portions that fluidically connect the heat exchanger 100 to an external pipe (not illustrated). The ports 22a and 22b have flow passage widths W2a and W2b smaller than the flow passage width W1 in the width direction (B-direction), respectively (W2a and W2b < W1). The ports 22a and 22b have flow passage heights H2a and H2b larger than the flow passage height H1 in the flow passage height direction (A-direction), respectively (H2a and H2b > H1).

Since the ports 22a and 22b have a substantially circular tubular shape in the embodiment, the flow passage width W2a (W2b) and the flow passage height H2a (H2b) are the same and match the inner diameters of the ports 22a (21b), respectively. The ports 22a each have an inner diameter larger than those of the ports 22b (W2a > W2b, and H2a > H2b).

In total, four ports 22 (22a and 22b) are disposed to be separated away from each other so as not to interfere the external pipe. That is, two ports 22a (entrance side and exit side) are disposed to be separated away from each other in the Z-direction at a center side of the header 2 in the Y-direction. Two ports 22b (entrance side and exit side) are disposed at each end portion side of the header 2 in the Y-direction so as to be separated away from each other in the Z-direction.

### <Tank>

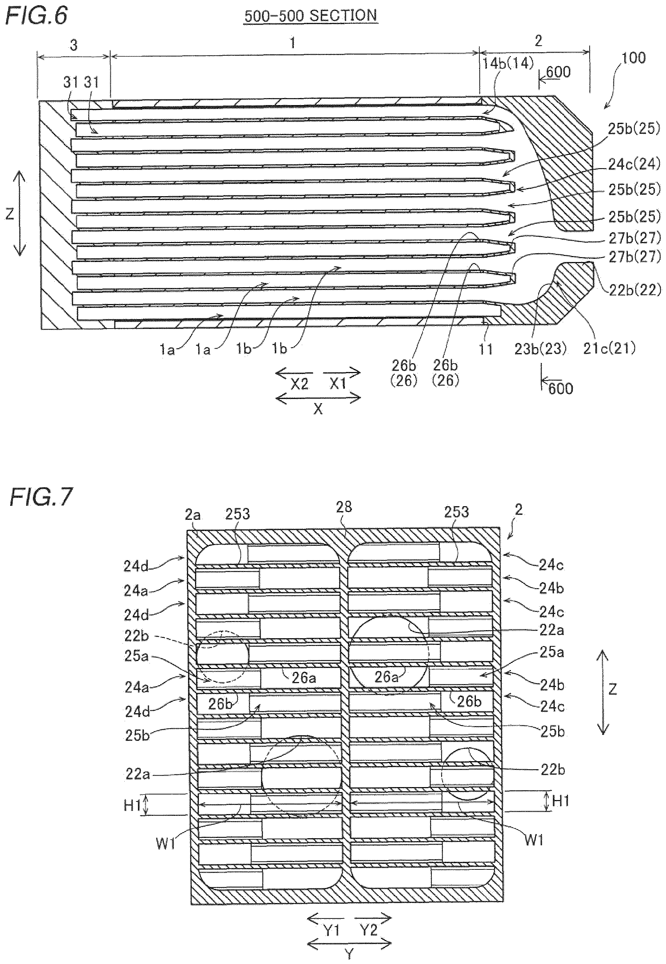

As illustrated in Figs. 5 and 6, the tanks 23 (23a and 23b) are space portions extending in the Z-direction, and are gathering portions for fluids flowing between the ports 22 and the respective core end openings 14 (entrance openings 15a or exit openings 15b). Although only a longitudinal section passing through the tank 23b is illustrated in Fig. 6, the tanks 23a have the same basic structure as the tanks 23b. The tanks 23 are connected to the ports 22 on the X1-direction side and are connected to the guiding flow passages 24 on the X2-direction side. The tanks 23 each are formed such that a flow passage height in the Z-direction becomes larger as facing toward a guiding flow passage 24 side. The tanks 23 each are formed such that a flow passage height smoothly increases from a port 22 side to the guiding flow passage 24 side. In addition, a boundary portion between an inside surface of each tank 23 and an inside surface of each port 22 is formed to be a curved surface that continues smoothly (edge is not formed).

In the boundary portions of the tanks 23 with the guiding flow passages 24, the tanks 23a and 23b have flow passage widths W3a and W3b (refer to Figs. 2 and 3) smaller than the flow passage width W1, respectively (W3a and W3b < W1). The flow passage width W3a (W3b) has a direction along a flow passage end surface 251, which is an end surface of each guiding flow passage 24, as a width direction. Both of the flow passage widths W3a and W3b are examples of a "second flow passage width" in the Claims. In addition, in the boundary portions of the tanks 23 with the guiding flow passages 24, the tanks 23 each have a flow passage height H3 (refer to Fig. 6) larger than the flow passage width W1 (H3 > H1). The flow passage height H3 has the Z-direction as a height direction. The flow passage height H3 is an example of a "second flow passage height" in the Claims.

### <Guiding flow passage>

As illustrated in Figs. 5 and 6, the guiding flow passages 24 (24a, 24b, 24c, and 24d) are connected to the plurality of corresponding core end openings 14 and extend to corresponding tank 23 sides. The guiding flow passages 24 are disposed on core 1 side end portions (X2-direction side end portions) of the header 2, and communicate with the tanks 23 on the Xl-direction side. In the embodiment, the guiding flow passages 24 have a plurality of flow passages 25 (25a and 25b) guiding a fluid between the plurality of core end openings 14 and the tank 23. The guiding flow passages 24 have a function of guiding a fluid such that the flow of the fluid between the plurality of core end openings 14 and the tank 23 becomes smooth.

Specifically, as illustrated in Fig. 2, the guiding flow passages 24a and 24b of the header portions 21a and 21b connected to the first flow passages 1a have the plurality of flow passages 25a (refer to Fig. 5) for guiding the fuel 4 flowing into or flowing out from each of the plurality of first flow passages 1a. As illustrated in Fig. 3, the guiding flow passages 24c and 24d of the header portions 21c and 21d connected to the second flow passages 1b have the plurality of flow passages 25b (refer to Fig. 5) for guiding the oil 5 flowing into or flowing out from each of the plurality of second flow passages 1b. That is, the plurality of respective flow passages 25a of the guiding flow passages 24a and 24b are connected to the core end openings 14a (refer to Fig. 4) of the first flow passages 1a. In addition, the plurality of respective flow passages 25b of the guiding flow passages 24c and 24d are connected to the core end openings 14b (refer to Fig. 4) of the second flow passages 1b.

In the embodiment, as illustrated in Figs. 2 and 3, the respective guiding flow passages 24 of the header portions (21a, 21b, 21c, and 21d) include the guiding flow passages 24a and 24c corresponding to the plurality of entrance openings 15a and the guiding flow passages 24b and 24d corresponding to the plurality of exit openings 15b. That is, the guiding flow passage 24a corresponds the entrance openings 15a of the first flow passages 1a. The guiding flow passage 24b corresponds the exit openings 15b of the first flow passages 1a. The guiding flow passage 24c corresponds the entrance openings 15a of the second flow passages 1b. The guiding flow passage 24d corresponds the exit openings 15b of the second flow passages 1b.

In the embodiment, the plurality of flow passages 25 (25a and 25b) each are configured to guide a fluid between the plurality of core end openings 14 and the tank 23 while changing a flow passage sectional shape orthogonal to the flow direction of fluids (fuel 4 and oil 5). That is, the respective flow passages 25 (25a and 25b) each connect the core end openings 14 to the tank 23 while changing the flow passage sectional shape. In this specification, "changing the flow passage sectional shape" means changing at least one of a flow passage height, a flow passage width, or a geometric shape (including a rectangle, a square, and a circle) of the flow passage section.

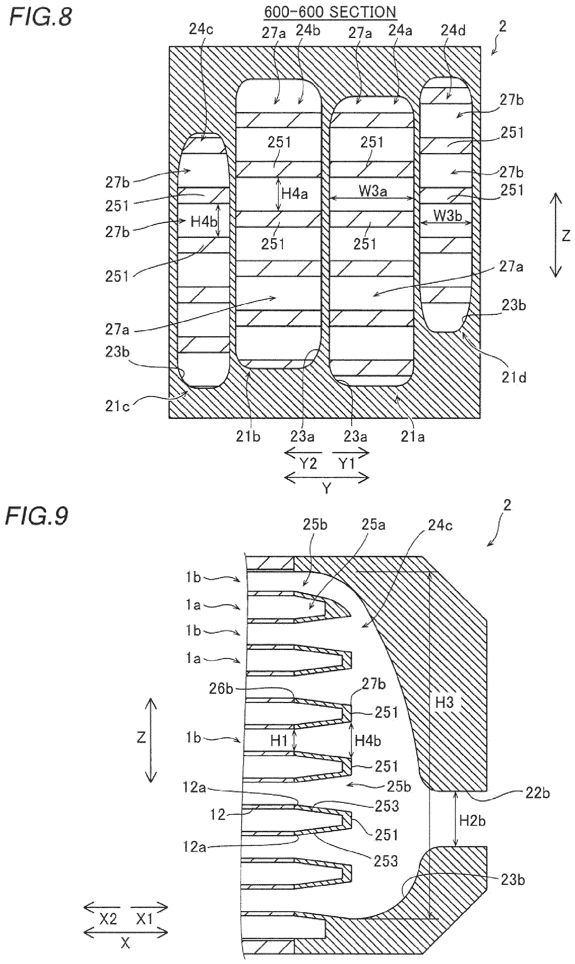

The flow passages 25 have core side openings 26 (refer to Fig. 7) disposed at the X2-direction side end portions and tank side openings 27 (refer to Fig. 8) disposed at the X1-direction side end portions, as illustrated in Fig. 6. The flow passages 25 each are provided as a pair with the corresponding core end opening 14. That is, the core side openings 26a of the flow passages 25a are connected to the corresponding core end openings 14a (refer to Fig. 2). The core side openings 26b of the flow passages 25b are connected to the corresponding core end openings 14b (refer to Fig. 3). In Fig. 7, a core side end portion 2a of the header 2 is illustrated with a hatching for convenience.

The respective flow passages 25 of the guiding flow passages 24 have different positions in the Y-direction since connection points (entrance openings 15a and exit openings 15b of first flow passages 1a, and entrance openings 15a and exit openings 15b of second flow passages 1b) are different from each other, and are formed such that the Y1-direction side and the Y2-direction side are substantially symmetric in the Y-direction. Each of the flow passages 25 has a common basic structure except the difference described above. Hereinafter, connection points of the flow passages 25 will be simply referred to as the "core end openings 14", and a structure common to the respective flow passages 25a and 25b will be described except when the necessity arises.

As illustrated Fig. 6, the tank side openings 27 of the flow passages 25 are open to the inside of the tanks 23. Flow passage end surfaces 251 on a tank 23 side of the guiding flow passages 24 in which the tank side openings 27 are formed (refer to Figs. 2, 3, and 5) are obliquely inclined in an XY-plane with respect to the X-direction and the Y-direction. In addition, the flow passage end surfaces 251 are smoothly connected to the inside surfaces of the tanks 23. The Y-direction dimensions of the inclined flow passage end surfaces 251 are set to substantially match the Y-direction dimensions of the ports 22 (flow passage widths W2a and W2b). In addition, the inside surface 252 of the flow passages 25 (refer to Figs. 2, 3, and 5) are formed to smoothly connect the inside surfaces of the core end openings 14 to the inside surfaces of the tanks 23. In Fig. 8, the flow passage end surfaces 251 appeared in the tanks 23 are illustrated with hatching in order to differentiate from the tank side openings 27.

As illustrated in Figs. 4 and 7, sectional shapes of the core side openings 26 (opening shapes) match sectional shapes of the corresponding core end openings 14 (opening shapes). That is, the core side openings 26 each have the flow passage height H1 and the flow passage width W1, which are the same as the flow passage height H1 and the flow passage width W1 of each of the core end openings 14. As illustrated in Fig. 8, sectional shapes of the tank side openings 27a and 27b (opening shapes) have flow passage heights H4a and H4b larger than the flow passage height H1, and the flow passage widths W3a and W3b smaller than the flow passage width W1, respectively. The sectional shapes of the tank side openings 27 are opening shapes in the flow passage end surfaces 251.

In the embodiment, each of the flow passages 25a and 25b has a flow passage sectional shape which changes such that the closer to a core end opening 14 side, the closer a flow passage width become to the flow passage width W1 of each of the core end openings 14 (refer to Fig. 7), and the closer to a tank 23 side, the closer a flow passage width become to the flow passage widths W3a and W3b of the boundary portions with the tanks 23 (refer to Fig. 8), as illustrated in Figs. 2 and 3. Specifically, each of the flow passages 25a and 25b is formed such that a flow passage width substantially decreases in a monotonic manner from the flow passage widths W1 of the core end openings 14 (refer to Fig. 7) to the flow passage widths W3a andW3b of the tank side openings 27 (refer to Fig. 8).

In addition, in the embodiment, each of the flow passages 25 has a flow passage sectional shape which changes such that the closer to the core end opening 14 side, the closer a flow passage height become to the flow passage height H1, and the closer to the tank 23 side, the closer a flow passage height become to the flow passage height H3, as illustrated in Fig. 9. Specifically, each of the flow passages 25 is formed such that a flow passage height substantially increases in a monotonic manner from the flow passage height H1 of the core side opening 26 (core end opening 14) to the flow passage heights H4a and H4b of the tank side openings 27. The flow passage heights H4a and H4b are heights between the flow passage height H1 and the flow passage height H3 (H3 > H4a and H4b > H1). That is, the flow passage heights of the flow passages 25b illustrated in Fig. 9 are enlarged such that the more the flow passages protrude toward a flow passage 25a side adjacent to the Z-direction the closer to the tank side openings 27.

More specifically, since the first flow passages 1a and the second flow passages 1b are alternately stacked in the Z-direction, the flow passages 25b that communicate with the second flow passages 1b and the flow passages 25a that communicate with the first flow passages 1a are adjacent to each other in the Z-direction, and each flow passage is defined by bulkheads 253 and a flow passage end surface 251. For this reason, the flow passages 25a are blocked without openings due to the flow passage end surfaces 251 of the flow passages 25b, in which the tank side openings 27b are formed. In other words, the plurality of tank side openings 27 (27a or 27b) are arranged in the flow passage end surfaces 251 in the Z-direction at intervals equivalent to one layer of the first flow passages 1a or the second flow passages 1b stacked in the Z-direction. For this reason, each of the flow passages 25 is formed by enlarging a flow passage height such that an interval between the adjacent tank side openings 27 in the Z-direction is smaller than an interval equivalent to one layer of the flow passage unit (H1 + thickness of tube plate 12). Although not illustrated, the same applies to the flow passages 25a.

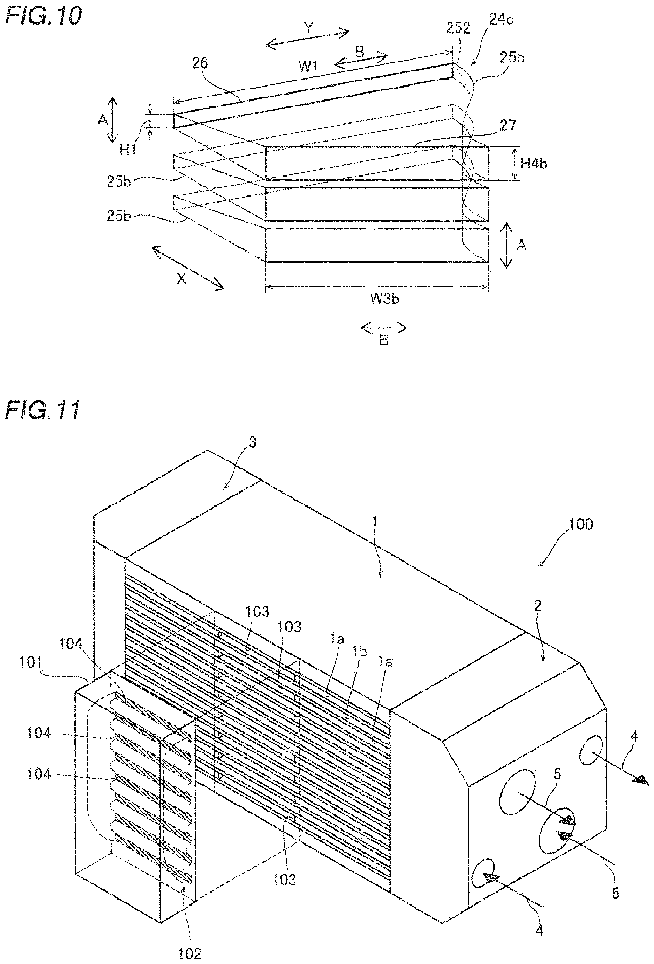

In the embodiment, the flow passages 25 each are formed such that a ratio between a flow passage width and a flow passage height of a flow passage sectional shape (aspect ratio) is changed while a flow passage sectional area is kept substantially constant in the flow direction of a fluid. For example, as in Fig. 10 in which the flow passages 25b are conceptually illustrated, the flow passages 25b each have the flow passage width W1 and the flow passage height H1 in the core side opening 26 and have the flow passage width W3b (< W1) and the flow passage height H4b (> H1) in the tank side opening 27. The opening area of each core side opening 26 (flow passage width W1 x flow passage height H1) is substantially the same as the opening area of each tank side opening 27 (flow passage width W3b x flow passage height H4b). In addition, the flow passages 25 each are formed such that a flow passage sectional area thereof in a direction orthogonal to the flow direction of a fluid (oil 5) is kept substantially constant even in a middle portion between the core side opening 26 and the tank side opening 27.

Therefore, the flow passages 25 each have a flow passage sectional shape which is a horizontally long (wide) shape matching the core end opening 14 in the core side opening 26, and have an aspect ratio of the section (ratio between a flow passage width and a flow passage height) that changes such that the closer to the tank side opening 27, the smaller the flow passage width and the larger the flow passage height. As a result, the tank side openings 27 of the flow passages 25 each have a shape close to a vertically long shape narrower than the core side opening 26, and have a sectional shape close to the sectional shape of the tank 23 illustrated in Fig. 8. Although not illustrated, the same applies to the flow passages 25a.

In the embodiment, as described above, in total, four header portions (21a, 21b, 21c, and 21d) are formed in a single header 2, by means of the three-dimensional modelling technology (so-called 3D printer). The header 2 is formed, for example, by means of a powder lamination molding method in which a powdery material is irradiated with a laser or an electronic beam to be melted or sintered. The same material as the core 1 can be used as a material of the header 2, and for example, an aluminum alloy, stainless steel (SUS), a titanium alloy, and a nickel alloy can be used.

Next, a joining portion between the end surface 11 of the core 1 and the header 2 will be described.

As illustrated in Fig. 7, the appearance of the core side end portion 2a (hatching portion) of the header 2 has the same rectangular shape as the appearance of the end surface 11 (refer to Fig. 4) of the core 1. An edge 28 configuring the appearance shape of the header 2 and the bulkheads 253 defining the respective flow passages 25 of the guiding flow passages 24 are exposed to the core side end portion 2a. In the core side end portion 2a, the edge 28 has a rectangular shape and the bulkheads 253 are formed in a lattice shape.

In the embodiment, the edge 28 (refer to Fig. 7) of the header 2 is joined to an edge of the end surface 11 (refer to Fig. 4) of the core 1, and the respective bulkheads 253 (refer to Fig. 7) of the plurality of flow passages 25 of the header 2 are joined to core end surface portions 12a (refer to Fig. 4) of the tube plates 12 between the first flow passages 1a and the second flow passages 1b.

The edge 28 of the header 2 is joined to the side plates 13, end surface portions of the side bars 16, and Y-direction end portions of the core end surface portions 12a of the tube plates 12, of the end surface 11 of the core 1. The bulkheads 253 of the header 2 are joined to the core end surface portions 12a of the tube plates 12 and the end surface portions of the partitioning members 18, of the end surface 11 of the core 1. In other words, the header 2 is joined to the core 1 with the substantially entire end surface region, except for the core end openings 14 formed in the end surface 11 of the core 1, as a joining region.

In the embodiment, the header 2 is directly formed on the end surface 11 of the core 1 by the 3D printer described above which adopted the three-dimensional modelling technology. That is, first, the assembly of the core 1 on which the side plates 13, the side bars 16, the partitioning members 18, the corrugated fins 19, and the tube plates 12 are stacked is joined by brazing, and thus the core 1 is formed. After then, by the header 2 being directly modelled on the end surface 11 of the core 1, the header 2 is configured.

### (Header for U-turn flow)

As illustrated in Figs. 2 and 3, the header for U-turn flow 3 is provided on the core 1 to cover the openings for U-turn flow 17 of the core 1, and has a flow passage for U-turn flow 31. The flow passage for U-turn flow 31 has a substantially semicircular shape, and is provided so as to correspond to each of the first flow passages 1a and the second flow passages 1b. Accordingly, a fluid flowed into the flow passage for U-turn flow 31 from one of the openings for U-turn flow 17 (exit portions 17a) flows in a substantially semicircle along the flow passage for U-turn flow 31 to make a U-turn, and flows into the other one of the openings for U-turn flow 17 (entrance portions 17b).

### (Effects of the embodiment)

In the heat exchanger 100 of the embodiment, the following effects can be obtained.

In the heat exchanger 100 of the embodiment, as described above, the header portions 21a and 21b are provided with the guiding flow passages 24a and 24b, which are connected to the plurality of core end openings 14a of the first flow passages 1a and have the plurality of flow passages 25a extending to the corresponding tank 23 side, respectively. The header portions 21c and 21d are provided with the guiding flow passages 24c and 24d, which are connected to the plurality of core end openings 14b of the second flow passages 1b and have the plurality of flow passages 25b extending to the corresponding tank 23 side, respectively. The plurality of flow passages 25 (25a and 25b) each are configured to guide a fluid between the plurality of core end openings 14 and the tank 23 while changing a flow passage sectional shape orthogonal to the flow direction of a fluid. Accordingly, the heat exchanger 100 of the embodiment can set flow passage sectional shapes of the plurality of flow passages 25 of flow passage guiding units 24 regardless of the flow passage sectional shapes of the core end openings 14, and can guide fluids (fuel 4 and oil 5) between the tanks 23 and the core 1 via each of the flow passages 25. That is, the flow passage sectional shapes of the plurality of flow passages 25 of the flow passage guiding units 24 can be changed to become closer to a flow passage sectional shape on the tank 23 side as becoming closer to the tank 23 side. In addition, the flow passage sectional shapes of the flow passages 25 of the flow passage guiding units 24 can be changed to become closer to the shapes of the core end openings 14 as becoming closer to the core end opening 14 side. As a result, since a change in the flow passage sectional shape between the core end openings 14a and 14b of the first flow passages 1a and the second flow passages 1b and the header 2 (tanks 23) can be made moderate, the heat exchanger 100 of the embodiment can suppress an increase in a pressure loss of a fluid when the fluid flows into the heat exchanger 100 or flows out from the heat exchanger 100 via the header 2.

In addition, by a header 23 being provided with the guiding flow passages 24 having the plurality of flow passages 25, it is not necessary to provide a flow passage structure, of which the sectional shape changes, on a core 1 side. As a result, the heat exchanger 100 of the embodiment can adopt the core 1 having a simple shape, and can suppress the structure of the core 1 becoming complicated.

In the heat exchanger 100 of the embodiment, as described above, the flow passages 25 (25a and 25b) each are formed to have a flow passage sectional shape which changes such that as the closer to the core end opening 14 (14a and 14b) side, the closer the flow passage width becomes to the flow passage width W1 of the core end opening, and the closer to the tank 23 (23a and 23b) side, the closer the flow passage width becomes to the flow passage widths W3a and W3b of the boundary portions between the flow passage guiding units 24 and the tanks 23. Accordingly, by changing the flow passage widths of the flow passages 25, a change in a flow passage width between the header 2 (tanks 23) and the core end openings 14 can be made moderate. As a result, the heat exchanger 100 of the embodiment can suppress an increase in the pressure loss caused by a sudden change in the flow passage widths of the boundary portions between the header 2 (tanks 23) and the core end openings 14.

In the heat exchanger 100 of the embodiment, as described above, the flow passages 25 (25a and 25b) each are formed to have a flow passage sectional shape which changes such that the closer to the core end opening 14 (14a and 14b) side, the closer the flow passage height becomes to the flow passage height H1 of the core end opening, and the closer to the tank 23 (23a and 23b) side, the closer the flow passage height becomes to the flow passage height H3 of each of the boundary portions between the flow passage guiding units 24 and the tanks 23. Accordingly, by changing the flow passage heights of the flow passages 25, a change in the flow passage height between the header 2 (tanks 23) and the core end openings 14 can be made moderate. As a result, the heat exchanger 100 of the embodiment can suppress an increase in the pressure loss caused by a sudden change in the flow passage height of a boundary portion between the header 2 (tanks 23) and the core end openings 14.

In the heat exchanger 100 of the embodiment, as described above, the flow passages 25 each are formed such that a ratio between a flow passage width and a flow passage height of a flow passage sectional shape is changed while a flow passage sectional area is kept substantially constant in the flow direction of a fluid (fuel 4 and oil 5). Accordingly, even in a case where the flow passage widths or the flow passage heights of the flow passages 25 are changed according to the shapes of the core end openings 14 and the flow passage sectional shapes on the tank 23 side, it is not necessary to change the flow passage sectional area of each of the flow passages 25 to become larger. As a result, the heat exchanger 100 of the embodiment can suppress an increase in the pressure loss caused by a change in the flow passage sectional areas of the flow passages 25.

In the heat exchanger 100 of the embodiment, as described above, the header portions 21a and 21b and the header portions 21c and 21d are integrally provided in the common header 2. The guiding flow passages 24a and 24b having the plurality of flow passages 25a for guiding a fluid flowing into or flowing out from the plurality of first flow passages 1a and the guiding flow passages 24c and 24d having the plurality of flow passages 25b for a fluid flowing into or flowing out from the plurality of second flow passages 1b are provided in the corresponding header portions 21a to 21d, respectively. Accordingly, even in a case where the core end openings 14a of the first flow passages 1a and the core end openings 14b of the second flow passages 1b are formed in the common end surface 11 of the core 1, the header 2 can be used in common. As a result, since the internal volume of the header 2 can be decreased compared to a case where the header 2 is separately provided from the first flow passages 1a and the second flow passages 1b, the heat exchanger 100 of the embodiment can suppress the total weight (wet weight) of the heat exchanger 100, in particular, in a case where liquid fluids (fuel 4 and oil 5) are used. This is particularly useful in application of strict weight limits of an aircraft as in the embodiment. In addition, even in a case where the header 2 is used in common to the first flow passages 1a and the second flow passages 1b, the suppression of a pressure loss can be achieved by changing the flow passage sectional shape of each of the flow passages (25a and 25b) of the guiding flow passages (24a, 24b, 24c, and 24d).

In the heat exchanger 100 of the embodiment, as described above, the header portions 21a and 21b that cover the entrance openings 15a and the exit openings 15b of the first flow passages 1a (core end openings 14a) respectively are provided with the guiding flow passages 24a and 24b respectively. In addition, the header portions 21c and 21d that cover the entrance openings 15a and the exit openings 15b of the second flow passages 1b (core end openings 14b) respectively are provided with the guiding flow passages 24c and 24d respectively. Accordingly, even in a case where both of the entrance openings 15a and the exit openings 15b are formed in the common end surface 11 of the core 1, the header 2 can be used in common due to the guiding flow passages 24a and 24c corresponding to the entrance openings 15a and the guiding flow passages 24b and 24d corresponding to the exit openings 15b. As a result, the total weight (wet weight) of the heat exchanger 100 of the embodiment can be suppressed compared to a case where the header 2 is separately provided from the entrance openings 15a and the exit openings 15b. In addition, even in a case where the header 2 is used in common, the heat exchanger 100 of the embodiment can achieve the suppression of a pressure loss by changing the flow passage sectional shape of each of the flow passages (25a and 25b) of the guiding flow passages 24a and 24c and the guiding flow passages 24b and 24d.

In the heat exchanger 100 of the embodiment, as described above, the edge 28 of the header 2 is joined to an edge of the end surface 11 of the core 1, and the respective bulkheads 253 of the plurality of flow passages 25 of the header 2 are joined to core end surface portions 12a of the tube plates 12 between the first flow passages 1a and the second flow passages 1b. Accordingly, the core 1 and the header 2 can be joined not only to the edges but also to an outer surface where the core end openings 14 (core end surface portions 12a of tube plates 12) are not formed, in the end surface 11 in which the core end openings 14 are formed. As a result, since a joining area can be increased and a region between both ends of the end surface 11 of the core 1 in the Y-direction can be set as a joining region, the heat exchanger 100 of the embodiment can effectively improve the joining strength of the core 1 and the header 2. In addition, since the pressure resistance performance of the header 2 can be improved with the improvement of the joining strength and the degree of freedom of internal structure of the header 2 can be enhanced, the heat exchanger 100 of the embodiment can easily optimize the shapes of the flow passages 25 and the tanks 23 of the header 2.

In the heat exchanger 100 of the embodiment, as described above, the respective core end openings 14a and 14b of the plurality of first flow passages 1a and the plurality of second flow passages 1b are vertically arranged in the end surface 11 of the rectangular parallelepiped core 1. The header 2 is joined to the end surface 11 so as to collectively cover the respective core end openings 14 of the plurality of first flow passages 1a and the plurality of second flow passages 1b. Accordingly, since the core 1 can be formed in a rectangular parallelepiped shape just as a general stacked heat exchanger, it can be suppressed that the structure of the core 1 becomes complicated. In addition, since the flow passages 25 of the guiding flow passages 24 can distribute (guide) a fluid to the first flow passages 1a and the second flow passages 1b, it is not necessary to form the respective core end openings 14 of the plurality of first flow passages 1a and the plurality of second flow passages 1b at positions separated away from each other in order to mount another header 2. As a result, the heat exchanger 100 of the embodiment can simplify the structure of the core 1.

It is to be considered that the embodiment disclosed herein is merely an example in all respects and does not limit the invention. The scope of the invention is described in the Claims not in the embodiment described above, and includes all modifications (modification examples) within the same meaning and scope of the Claims.

For example, although an example of a plate-fin heat exchanger is given in the embodiment, the invention is not limited thereto. In the invention, for example, the invention may be applied to a shell and tube type heat exchanger. In the invention, any type of heat exchanger may be adopted insofar as a heat exchanger has the structure of distributing a fluid to a plurality of core end surface openings from a header.

In addition, although an example of the heat exchanger 100 that is mounted on an aircraft and exchanges heat between fuel for an aircraft and oil for an aircraft (lubricating oil) is given in the embodiment, the invention is not limited thereto. In the invention, the type of a fluid may be any fluid other than fuel and oil. A fluid may be a gas or a liquid.

Although an example in which the first flow passages and the second flow passages are provided to exchange heat between two types of fluids is given in the embodiment, the invention is not limited thereto. In the invention, three or more types of flow passage units may be provided to exchange heat among three or more types of fluids.

Although an example in which the four header portions (21a, 21b, 21c, and 21d) having the guiding flow passages 24 are formed in a single header 2 is given in the embodiment, the invention is not limited thereto. One to three header portions may be provided in the header. For example, each of a header having two header portions corresponding to an entrance opening and an exit opening of the first flow passages 1a and a header having two header portions corresponding to an entrance opening and an exit opening of the second flow passages 1b may be provided. Four headers each having one header portion may be provided.

Although an example in which three headers for U-turn flow 3 that cause a fluid flowed out from the core 1 to make a U-turn and return to the core 1 is given in the embodiment, the invention is not limited thereto. In the invention, the header for U-turn flow may not be provided. U-turn portions may be provided at the first flow passages and the second flow passages inside the core 1. In addition, a fluid may not make a U-turn. In this case, the headers 2 may be provided instead of the headers for U-turn flow 3, one header in the X-direction may be set as an entrance side, and the other header in the X-direction may be set as an exit side.

Although an example of a counter-flow heat exchanger in which the fuel 4 and the oil 5 flow in opposite directions is given in the embodiment, the invention is not limited thereto. In the invention, a parallel flow heat exchanger in which fuel and oil flow in the same direction or a cross-flow heat exchanger in which fuel and oil flow in directions orthogonal to each other may be adopted.

Although an example in which the flow passage width and the flow passage height of each of the plurality of flow passages 25 of the guiding flow passages 24 are changed in the flow direction of a fluid is given in the embodiment, the invention is not limited thereto. In the invention, by changing any one of the flow passage width or the flow passage height of each of the plurality of flow passages 25, the other one may not be changed. For example, in Figs. 9 and 10, the flow passage heights of the plurality of flow passages 25 may be kept constant at H1 to change flow passage widths. The flow passage widths of the plurality of flow passages 25 may be kept constant at W1 to change flow passage heights.

Although an example in which the flow passages 25 each are formed such that a flow passage sectional area is kept substantially constant in the flow direction of a fluid and a ratio between a flow passage width and a flow passage height of a flow passage sectional shape (aspect ratio) is changed is given in the embodiment, the invention is not limited thereto. In the invention, the flow passage sectional areas of the flow passages may be changed.

Although an example in which separate first flow passages 1a are independently provided without being connected to other first flow passages from the entrance openings 15a to the exit openings 15b is given in the embodiment, the invention is not limited thereto. In the invention, as illustrated in Fig. 11, a mixing header 101 for causing the plurality of first flow passages 1a to communicate with each other from the entrance openings 15a to the exit openings 15b may be provided. At this time, a guiding flow passage 102 having a plurality of flow passages may be formed in the mixing header 101. The mixing header 101 is provided to cover openings 103 formed in the middle of the respective first flow passages 1a, and stirs a fluid flowed into the mixing header 101 via core side openings 104 (hatching portion) to return to each of the first flow passages 1a. In this case, the plurality of flow passages of the guiding flow passage 102 may be configured to change flow passage sectional shapes to guide a fluid such that for example, spiral flow (swirl or tumble) occurs inside the mixing header 101. Accordingly, temperature unevenness in the respective first flow passages 1a can be reduced. The same applies to the second flow passages 1b.

Although an example in which the header 2 is directly formed (modelled) on the end surface 11 of the core 1 by means of the three-dimensional modelling technology is given in the embodiment, the invention is not limited thereto. In the invention, the header may be separately manufactured from the core and be joined to the core by brazing.

In addition, although an example in which the core end surface portions 12a of the tube plates 12 on the end surface 11 of the core 1 are joined to the bulkheads 253 of the header 2 is given in the embodiment, the invention is not limited thereto. In the invention, the edge of the end surface 11 of the core 1 may be joined to the edge 28 of the core side end portion 2a of the header 2 by welding, and may not be joined to an inside region (bulkheads 253) of the end surface 11.

### Description of Reference Numerals

1 core
1a first flow passage
1b second flow passage
2 header
2a edge
4 fuel (fluid)
5 oil (fluid)
11 end surface
12 tube plate (partition plate)
12a core end surface portion
14 (14a, 14b) core end opening
15a entrance opening
15b exit opening
21a, 21b header portion (first header portion)
21c, 21d header portion (second header portion)
22 (22a, 22b) port
23 (23a, 23b) tank
24a guiding flow passage (first guiding flow passage, entrance guiding flow passage)
24b guiding flow passage (first guiding flow passage, exit guiding flow passage)
24c guiding flow passage (second guiding flow passage, entrance guiding flow passage)
24d guiding flow passage (second guiding flow passage, exit guiding flow passage)
25 (25a, 25b) flow passage
100 heat exchanger
253 bulkhead
W1 flow passage width (first flow passage width)
W2a, W2b flow passage width (second flow passage width)
H1 flow passage height (first flow passage height)
H2a, H2b flow passage height (second flow passage height)

## Claims

1. A heat exchanger comprising:
a core that includes a plurality of first flow passages and a plurality of second flow passages and exchanges heat between fluids flowing in the first flow passages and the second flow passages respectively; and
a header that includes a first header portion, which is connected to an end surface of the core and covers core end openings of the plurality of first flow passages, and a second header portion, which covers core end openings of the plurality of second flow passages,
wherein the first header portion and the second header portion each include a port for causing the fluids to flow into or flow out from an inside thereof and a tank connected to the port, and
at least one of the first header portion or the second header portion includes a guiding flow passage that is connected to the plurality of core end openings of one of the first flow passages or the second flow passages and that has a plurality of flow passages which extend to a corresponding tank side and guide the fluids between the plurality of core end openings and the tank while changing a flow passage sectional shape orthogonal to a flow direction of the fluids.

2. The heat exchanger according to Claim 1,
wherein the plurality of core end openings each have a first flow passage width in a width direction orthogonal to a flow passage height direction, in a section orthogonal to the flow direction of the fluids,
the tank has a second flow passage width smaller than the first flow passage width in the width direction, in a boundary portion of the tank with the guiding flow passage, and
the flow passages each have the flow passage sectional shape which changes such that the closer to a core end opening side, the closer a flow passage width becomes to the first flow passage width, and the closer to the tank side, the closer the flow passage width becomes to the second flow passage width.

3. The heat exchanger according to Claim 1 or 2,
wherein the plurality of core end openings each have a first flow passage height in a flow passage height direction, in a section orthogonal to the flow direction of the fluids,
the tank has a second flow passage height larger than the first flow passage height in the flow passage height direction, in a boundary portion of the tank with the guiding flow passage, and
the flow passages each have the flow passage sectional shape which changes such that the closer to the core end opening side, the closer a flow passage height becomes to the first flow passage height, and the closer to the tank side, the closer the flow passage height becomes to the second flow passage height.

4. The heat exchanger according to any one of Claims 1 to 3,
wherein the flow passages each are formed such that a ratio between a flow passage width and a flow passage height of the flow passage sectional shape is changed while a flow passage sectional area is kept substantially constant in the flow direction of the fluids.

5. The heat exchanger according to any one of Claims 1 to 4,
wherein the first header portion and the second header portion are integrally provided in the common header, and
the guiding flow passage includes a first guiding flow passage having the plurality of flow passages for guiding the fluids flowed into or flowed out from the plurality of first flow passages and a second guiding flow passage having the plurality of flow passages for guiding the fluids flowed into or flowed out from the plurality of second flow passages.

6. The heat exchanger according to any one of Claims 1 to 5,
wherein the core end openings of the first flow passages and the core end openings of the second flow passages each include a plurality of entrance openings and a plurality of exit openings formed in the end surface of the core, and
the guiding flow passage provided in at least one of the first header portion covering the first flow passages or the second header portion covering the second flow passages includes an entrance guiding flow passage corresponding to the plurality of entrance openings and an exit guiding flow passage corresponding to the plurality of exit openings.

7. The heat exchanger according to any one of Claims 1 to 6,
wherein the core has a stacked structure in which the plurality of first flow passages and the plurality of second flow passages are alternately stacked in a height direction via partition plates, and
an edge of the header is joined to an edge of the end surface of the core, and respective bulkheads of the plurality of flow passages of the header are joined to core end surface portions of the partition plates between the first flow passages and the second flow passages.

8. The heat exchanger according to any one of Claims 1 to 7,
wherein the core has a rectangular parallelepiped shape, and the respective core end openings of the plurality of first flow passages and the plurality of second flow passages are vertically arranged in the end surface formed of any one of side surfaces of a rectangular parallelepiped, and
the header is joined to the end surface so as to integrally include the first header portion and the second header portion and to collectively cover the respective core end openings of the plurality of first flow passages and the plurality of second flow passages.
